# DEMANDE DE BREVET EUROPEEN

(11) **EP 0 816 161 A1**
(43) Date de publication de la demande: **07.01.1998**
(21) Numéro de dépôt: 97401430.0
(22) Date de dépôt: 20.06.1997
(51) Int. Cl.: B60N 2/28

(54) **Siège pour enfant destiné à être fixé sur un siège de véhicule au moyen d'une ceinture de sécurité**

(30) Priorité: 28.06.1996 FR 9608134
(71) Demandeur: AMPAFRANCE S.A., 49309 Cholet (FR)
(72) Inventeur: Surot, Patrick, 49300 Cholet (FR)
(74) Mandataire: Casalonga, Axel

(57) **Abrégé**

Siège pour enfant comportant une partie d'assise 5 et une partie de dossier 6, destiné à être posé et fixé sur un siège 4 de véhicule automobile équipé d'une ceinture de sécurité 26 à enrouleur et à trois points comportant une portion ventrale 26b et une portion pectorale 26a, la partie de dossier comportant, sur sa face arrière, un moyen de guidage 25a de la portion pectorale 26a de la ceinture de sécurité, caractérisé par le fait que ledit siège comprend un élément rotatif 33 muni d'une boucle ouverte 32 permettant le passage de la portion pectorale 26a de la ceinture de sécurité et un moyen 35 d'entraînement en rotation dans un seul sens de l'élément rotatif 33 de façon à tendre la ceinture de sécurité à l'encontre du système à inertie de l'enrouleur 28.

## Description

La présente invention a pour objet un siège pour enfant comportant une partie d'assise et une partie de dossier, destiné à être posé et fixé sur un siège de véhicule automobile équipé d'une ceinture de sécurité à enrouleur et à trois points, comportant une portion ventrale et une portion pectorale.

On sait que les sièges pour enfant destinés à l'automobile sont conçus pour garantir un maximum de protection en cas d'accident et ce, dans les meilleures conditions de confort possibles. Un problème important dans ce type de siège pour enfant est la fixation et le blocage du siège pour enfant par rapport au siège du véhicule.

Cette fixation peut se faire par des moyens indépendants du véhicule. Toutefois il est généralement préféré d'utiliser la ceinture de sécurité dont le siège de véhicule automobile est équipé. Les ceintures de sécurité des véhicules actuels sont dites à trois points dans la mesure où elles définissent un brin ou portion ventrale qui maintient le passager au niveau des hanches et un brin ou portion pectorale qui s'étend au travers de la partie supérieure du corps du passager en passant au-dessus de l'une de ses épaules. Pour fixer un siège pour enfant sur le siège du véhicule au moyen d'une telle ceinture de sécurité à trois points, on fait généralement passer la portion ventrale en partie basse du siège pour enfant, par exemple sur une embase ou un élément d'armature rigide grâce auquel le siège pour enfant est posé sur le siège du véhicule. La portion pectorale de la ceinture de sécurité passe alors avantageusement derrière la partie de dossier du siège pour enfant dans un moyen de guidage prévu sur la face arrière du dossier du siège pour enfant.

Le brevet allemand n° 41 08 660 (CONCORD) et la demande de brevet européen n° 328 311 (BSRD) montrent une telle fixation du siège pour enfant.

Il peut être utile par ailleurs de bloquer par serrage la sangle pectorale à l'endroit de son passage dans les moyens de guidage prévus sur la face arrière du dossier du siège pour enfant. Un tel serrage est décrit par exemple dans la demande de brevet français n° 2 602 409 (AMPAFRANCE) où la portion pectorale de la ceinture de sécurité du véhicule est serrée entre deux montants transversaux de l'armature du siège pour enfant.

La demande de brevet allemand n° 35 05 009 (SCHRÄDER) décrit quant à elle un dispositif de serrage de la portion pectorale de la ceinture de sécurité au moyen d'une came qui vient bloquer en position ladite portion pectorale lors de son passage dans une fente. La demande de brevet européen n° 328 311 précitée prévoit également un dispositif de serrage et de mise en tension pour la portion pectorale de la ceinture de sécurité du véhicule au moyen d'une came rotative, l'ensemble permettant le blocage et la fixation du siège pour enfant au moyen d'une ceinture de sécurité à trois points munie d'un système d'enrouleur à inertie. Dans ce cas, on sait que la ceinture de sécurité n'est bloquée qu'en cas de choc ou de traction brutale de sorte qu'il est utile de prévoir des moyens supplémentaires de blocage sur le siège pour enfant. Il n'est cependant pas possible avec les moyens décrits dans ce document, qui comprennent un organe en forme de came exerçant un simple effet de serrage, de fixer aisément et convenablement le siège pour enfant en le bloquant en position par le biais de la portion pectorale de la ceinture de sécurité. De plus, il n'est pas possible de tendre efficacement la ceinture de sécurité du véhicule.

L'invention a pour objet un siège pour enfant qui puisse être efficacement bloqué en position sur le siège du véhicule automobile au moyen de la ceinture de sécurité dont ledit siège est équipé dans le cas où cette ceinture de sécurité présente un dispositif d'enroulement à inertie.

L'invention a également pour objet un tel siège pour enfant dans lequel la fixation et le blocage en position par rapport à la portion pectorale de la ceinture de sécurité se font de manière simple et rapide.

L'invention a encore pour objet un tel siège pour enfant grâce auquel une démultiplication de l'effort exercé pour tendre la ceinture du véhicule peut être obtenue de manière aisée.

Le siège pour enfant selon la présente invention comporte une partie d'assise et une partie de dossier et est destiné à être posé et fixé sur un siège de véhicule automobile équipé d'une ceinture de sécurité à enrouleur et à trois points comportant une portion ventrale et une portion pectorale. La partie de dossier comporte sur sa face arrière un moyen de guidage de la portion pectorale de la ceinture de sécurité. Le siège comprend un élément rotatif muni d'une boucle ouverte permettant le passage de la portion pectorale de la ceinture de sécurité et un moyen d'entraînement en rotation dans un seul sens de l'élément rotatif, de façon à tendre la ceinture de sécurité à l'encontre de l'enrouleur.

Il est ainsi possible de procéder d'une manière simple au blocage effectif de la portion pectorale de la ceinture de sécurité par rotation de celle-ci à l'endroit où elle passe dans la boucle ouverte précitée. Cette rotation peut être faite sur plusieurs tours jusqu'à ce que le dispositif à inertie de l'enrouleur ait été neutralisé, assurant ainsi un blocage effectif et constant de la portion pectorale de la ceinture de sécurité du véhicule automobile ainsi qu'une tension importante de la ceinture de sécurité grâce à la démultiplication de l'effort exercé qui permet de mieux plaquer le siège pour enfant sur le siège du véhicule.

Selon un mode de réalisation préféré de l'invention, le moyen d'entraînement en rotation dans un seul sens comprend un dispositif à cliquet et roue à rochet qui peut être aisément manoeuvré par l'utilisateur après que le siège pour enfant ait été posé en position convenable sur le siège du véhicule.

L'élément rotatif dont le siège est équipé comprend de préférence une barre transversale montée en vue de sa rotation derrière la partie de dossier du siège pour enfant.

Le siège pour enfant selon l'invention comprend en outre des moyens pour le passage de la portion ventrale de la ceinture de sécurité de façon à maintenir le siège pour enfant sur le siège du véhicule.

Dans un mode de réalisation avantageux de l'invention, le siège pour enfant comprend un baquet définissant la partie d'assise et la partie de dossier et une armature rigide, par exemple en tubes métalliques soutenant le baquet, l'armature étant destinée à être posée et fixée sur le siège du véhicule automobile. La barre transversale portant l'élément rotatif de tension de la portion pectorale de la ceinture de véhicule est solidaire de l'armature. La portion ventrale de la ceinture de sécurité passe au-dessus d'une partie en U de l'armature posée directement sur le siège du véhicule.

L'invention sera mieux comprise à l'étude d'un mode de réalisation particulier décrit à titre d'exemple nullement limitatif et illustré par les figures annexées sur lesquelles :
la figure 1 est une vue en élévation de côté d'un siège pour enfant conforme à la présente invention;
la figure 2 est une vue d'arrière du siège de la figure 1 montrant le passage de la portion pectorale de la ceinture de sécurité avant tension;
la figure 3 est une vue de détail du dispositif d'entraînement en rotation à cliquet avant tension;
la figure 4 est une vue analogue à la figure 3 montrant le début de la mise en tension;
et les figures 5 à 10 illustrent schématiquement le passage de la portion pectorale de la ceinture de sécurité dans la boucle du moyen d'entraînement dans diverses positions successives de rotation.

Tel qu'il est illustré sur les figures, le siège pour enfant référencé 1 dans son ensemble, comprend une partie moulée en matière plastique formant un baquet 2, et une armature métallique tubulaire 3 soutenant le baquet 2 et constituant un support destiné à être posé et fixé sur le siège 4 du véhicule, illustré schématiquement.

Le baquet 2 comprend une partie d'assise 5 sensiblement horizontale et une partie de dossier 6 sensiblement verticale avec cependant une légère inclinaison vers l'arrière pour améliorer le confort de l'enfant. La partie d'assise 5 et la partie de dossier 6 se rejoignent entre elles par une portion inférieure incurvée 7. Le baquet 2 est complété par des portions latérales 8 qui s'étendent depuis la partie supérieure 9 du baquet 2 qui joue le rôle d'un appui-tête, jusqu'à sa partie inférieure où elle rejoint la partie avant 5a de l'assise qui joue le rôle d'un soutien pour les jambes ou les pieds de l'enfant. L'ensemble ainsi constitué présente, comme on peut le voir sur les figures, une forme générale de baquet assurant ainsi le confort de l'enfant. Bien entendu le baquet en matière plastique moulé est habillé d'un rembourrage approprié qui n'est pas illustré sur les figures.

L'armature tubulaire 3 comprend un cadre inférieur 10 disposé sous la portion d'assise 5 et destiné à être posé sur le siège 4 du véhicule automobile. Le cadre inférieur 10 se prolonge vers le haut sous la forme d'un cadre arrière 11 qui reçoit en outre une barre d'écartement transversale 12 conçue sous la forme d'un U et fixée sur le cadre arrière 11 par des vis 12a en laissant subsister un léger écartement. L'ensemble de l'armature tubulaire 3 ainsi constitué peut être posé sur le siège 4 du véhicule, la barre d'écartement 12 venant prendre appui sur le dossier du siège 4. Le siège pour enfant 1 se trouve alors convenablement installé sur le siège 4 du véhicule, le baquet 2 étant supporté par l'armature rigide 3.

Le baquet 2 en matière plastique moulée est rendu solidaire de l'armature 3 à la fois dans sa partie basse et dans sa partie haute. A cet effet, la partie avant 5a présente deux excroissances 19 dirigées vers le bas et enserrant le montant transversal 10a du cadre inférieur 10. De la même manière, la partie de dossier 6 du baquet 2 présente dans sa portion supérieure et de chaque côté, une patte en saillie vers l'arrière, référencée 24, venue de moulage avec le baquet 2 et enserrant un montant transversal 25 de l'armature 3.

L'assujettissement du siège pour enfant 1 au siège de véhicule 4 se fait par le biais de la ceinture de sécurité 26 qui équipe le véhicule automobile. D'une manière classique une telle ceinture de sécurité 26 dite à trois points est fixée à la caisse 27 du véhicule automobile par ses deux extrémités dont l'une comprend un dispositif enrouleur à inertie 28 et l'autre une pièce d'ancrage 29. Le dispositif à enrouleur 28 est de type classique et ne sera pas décrit en détail dans le présent texte. Un tel dispositif enrouleur comprend des moyens à ressort agissant sur un tambour qui provoque une traction sur la ceinture de sécurité 26 tendant à enrouler cette dernière sur ledit tambour à l'intérieur de l'enrouleur. L'avantage d'un dispositif est de permettre au passager du véhicule automobile une liberté de mouvement en l'autorisant par exemple à se pencher en avant malgré la ceinture de sécurité 26. Pour que la ceinture de sécurité joue cependant son rôle en cas d'accident c'est-à-dire en cas de choc brutal, le dispositif enrouleur 28 comprend un moyen de blocage à inertie qui verrouille le déplacement de la ceinture de sécurité 26 à l'intérieur du dispositif à enrouleur 28 en cas de choc ou de traction brutale sur la ceinture de sécurité 26. Un tel dispositif donne pleinement satisfaction lorsque la ceinture de sécurité est utilisée par un passager adulte. Toutefois, lorsque la ceinture de sécurité 26 est utilisée pour fixer un siège pour enfant tel que le siège 1 sur le siège 4 du véhicule, on comprend qu'il soit important de neutraliser le fonctionnement du dispositif à inertie de l'enrouleur 28 de façon qu'en cas d'accident, le siège pour enfant 1 reste parfaitement solidarisé avec le siège 4 du véhicule automobile.

A la sortie de l'enrouleur 28, la ceinture de sécurité 26 passe sur une boucle 30 solidaire de la caisse 27 du véhicule automobile à travers laquelle elle passe librement et qui joue le rôle d'une poulie de déviation. La partie de la ceinture de sécurité 26 qui se trouve après la boucle 30 est généralement appelée portion pectorale 26a de la ceinture de sécurité 26 car elle est destinée à être normalement placée entre la hanche et l'épaule opposée du passager. Une boucle d'accrochage 31 peut se déplacer librement sur la ceinture de sécurité 26 et constitue la séparation entre la portion pectorale 26a et la portion ventrale 26b dont l'extrémité est amarrée sur la pièce d'ancrage 29. La boucle d'accrochage 31 coopère de manière connue avec un organe de verrouillage 31a fixé sur la caisse 27 du véhicule, par exemple par l'intermédiaire d'une tige de prolongation 33.

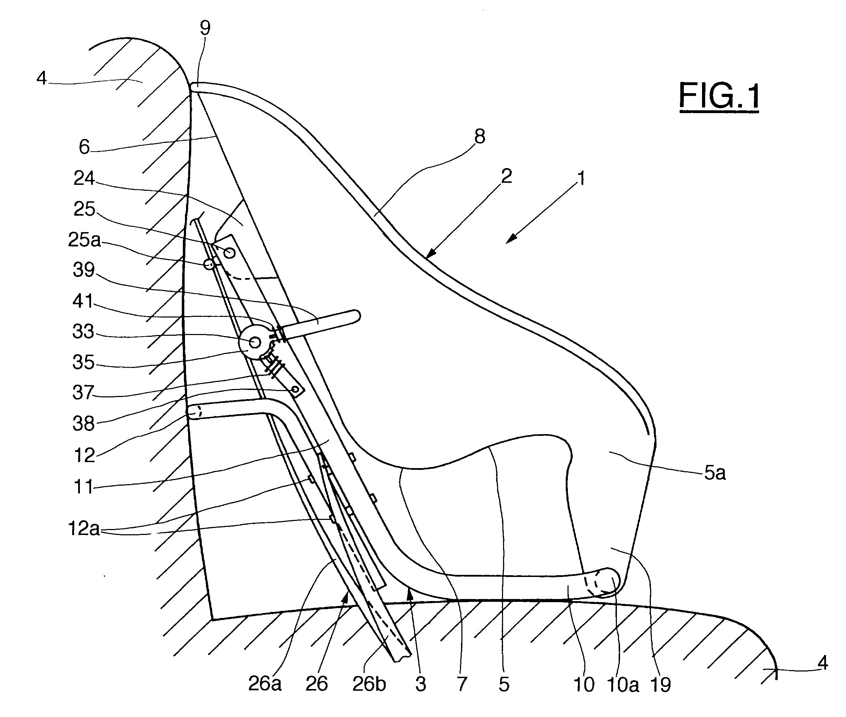

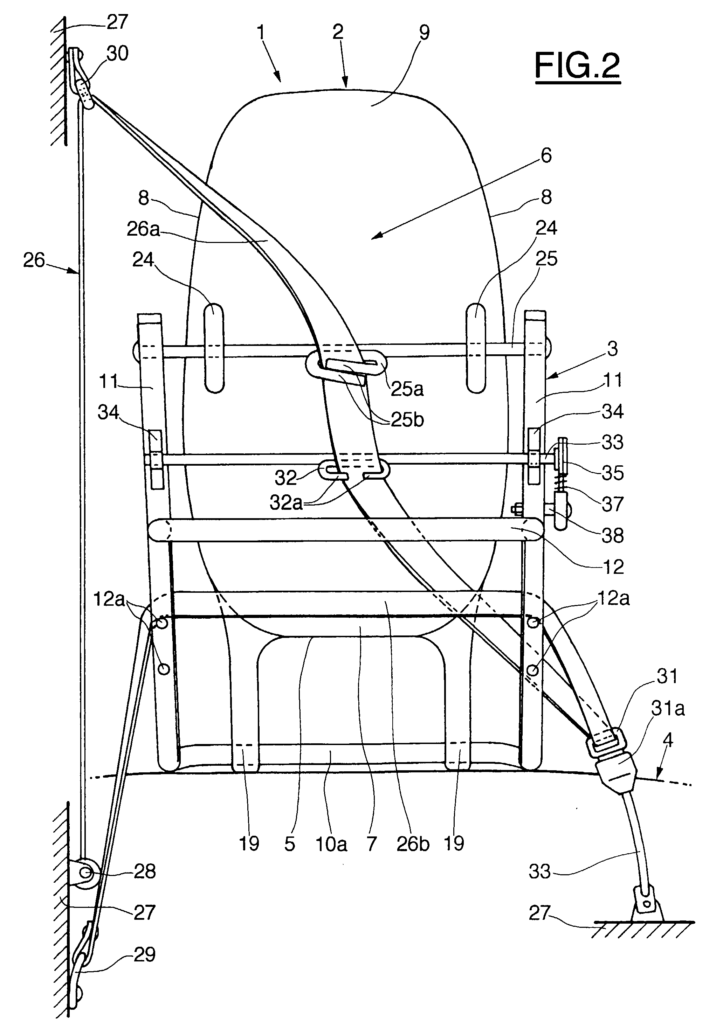

Comme on peut le voir sur les figures 1 et 2, la fixation du siège pour enfant 1 sur le siège 4 du véhicule automobile se fait à la fois au moyen de la portion ventrale 26b de la ceinture de sécurité 26 et de la portion pectorale 26a. La portion ventrale 26b peut être aisément passée entre la barre d'écartement en U 12 et le cadre arrière 11 en restant bloquée au niveau des vis de fixation 12a de ces deux éléments. La portion pectorale 26a peut être passée derrière le dossier 6 du siège 1. A cet effet, comme on peut le voir sur la figure 2, la portion pectorale 26a est tout d'abord introduite dans une boucle ouverte 25a solidaire du montant transversal 25 de l'armature 3. Il s'agit dans l'exemple illustré d'une boucle métallique soudée sur le montant transversal métallique 25 et présentant des branches 25b qui se recouvrent en partie et qui laissent entre elles une fente permettant l'introduction de la portion pectorale 26a à l'intérieur de la boucle 25a.

La portion pectorale 26a est ensuite introduite à l'intérieur d'une deuxième boucle ouverte 32 solidaire d'une tige rotative transversale 33. La boucle ouverte 32 présente une forme de C dont le dos est soudé à la tige rotative 33 et qui présente deux branches en saillie 32a laissant entre elles un espace qui permet l'introduction aisée de la portion pectorale 26a à l'intérieur de la boucle 32.

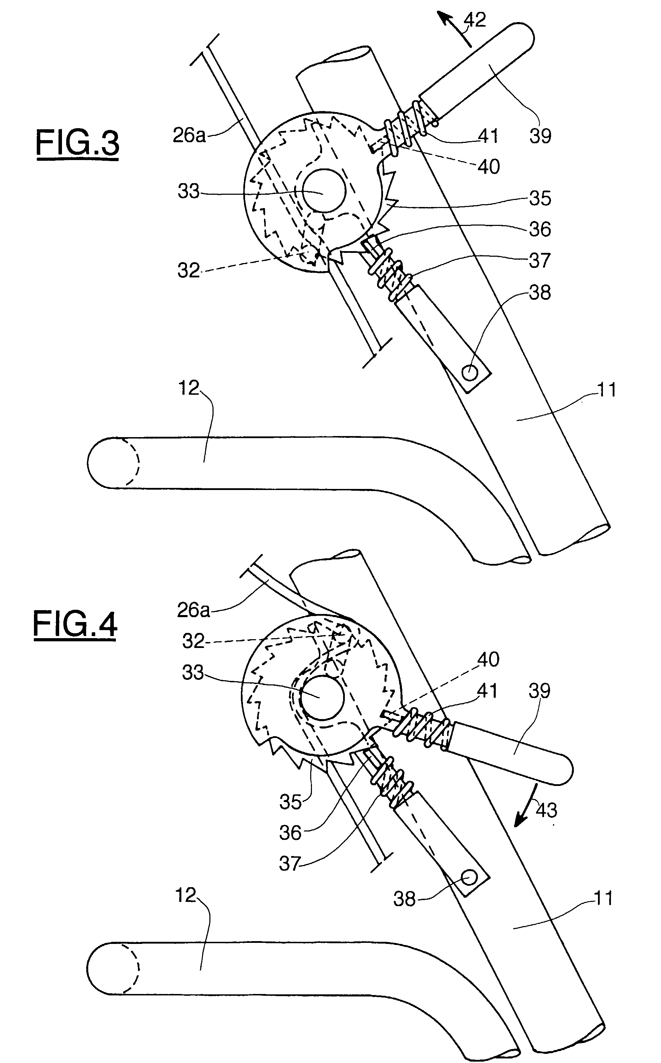

La tige rotative 33 est montée sur deux paliers 34 solidaires chacun de l'un des montants du cadre arrière 11. Sur l'un des côtés du siège 1, la tige rotative 33 fait saillie à l'extérieur du palier 34 et présente à son extrémité une roue à rochet 35 visible également sur les figures 3 et 4. Un premier dispositif à cliquet de verrouillage 36, poussé à l'encontre des dents de la roue à rochet 35 par un ressort de compression 37, est monté fixe sur un axe 38 solidaire du cadre arrière 11. Comme on peut le voir sur les figures 3 et 4, le cliquet 36 coopère avec les dents de la roue à rochet 35 de façon à ne permettre une rotation de cette dernière que dans le sens des aiguilles d'une montre par rapport aux figures 3 et 4.

Un levier de manoeuvre manuel 39 est en outre monté en rotation coaxialement à la tige rotative 33 et présente un deuxième cliquet 40 maintenu à l'encontre des dents de la roue à rochet 35 par un ressort de compression 41.

L'ensemble du dispositif fonctionne de la manière suivante. Après que le siège pour enfant 1 ait été disposé sur le siège du véhicule 4 comme illustré sur les figures 1 et 2, la ceinture de sécurité 26 du véhicule est mise en place comme illustré sur la figure 2. Comme il a été indiqué précédemment, la portion ventrale 26b est insérée entre la barre d'écartement transversale 12 et le cadre arrière 11 tandis que la portion pectorale 26a est passée successivement dans les boucles ouvertes 25a et 32. A cet effet, la tige rotative 33 a tout d'abord été placée dans la position illustrée sur la figure 3 dans laquelle il est facile de passer la portion pectorale 26a de la ceinture 26 dans la boucle ouverte 32. La boucle d'accrochage 31 est introduite dans l'organe de verrouillage 31a.

La position du siège pour enfant 1 sur le siège de véhicule 4 peut encore être aisément ajustée grâce à l'existence du dispositif à enrouleur 28 qui permet une traction sur la ceinture de sécurité 26. Pour fixer d'une manière efficace le siège pour enfant 1 en position sur le siège 4 du véhicule il suffit, par un mouvement brusque, de tirer sur la portion pectorale 26a de la ceinture de sécurité 26, de préférence entre la boucle 30 solidaire de la caisse du véhicule et la boucle de passage 25a. Un tel mouvement brusque de traction provoque en effet, par l'action du dispositif à inertie se trouvant dans le dispositif à enrouleur 28, le blocage de la ceinture de sécurité 26. En maintenant la traction sur la portion pectorale 26a, on procède alors au blocage effectif du siège pour enfant 1 en faisant subir au levier de manoeuvre 39 une succession de mouvements de va-et-vient. Grâce à l'existence des deux cliquets 36 et 40, un premier mouvement selon la figure 3 dans le sens de la flèche 42 dans le sens inverse des aiguilles d'une montre, ne provoque en effet aucune rotation de la tige 33. Au contraire un mouvement dans le sens de la flèche 43 indiquée sur la figure 4, c'est-à-dire dans le sens des aiguilles d'une montre, provoque la rotation de la tige 33 autour de son axe et entraîne également de ce fait la rotation de la boucle ouverte 32 en forme de C. Le cliquet 36 s'oppose à tout retour de la tige rotative 33 dans l'autre sens c'est-à-dire dans le sens inverse des aiguilles d'une montre.

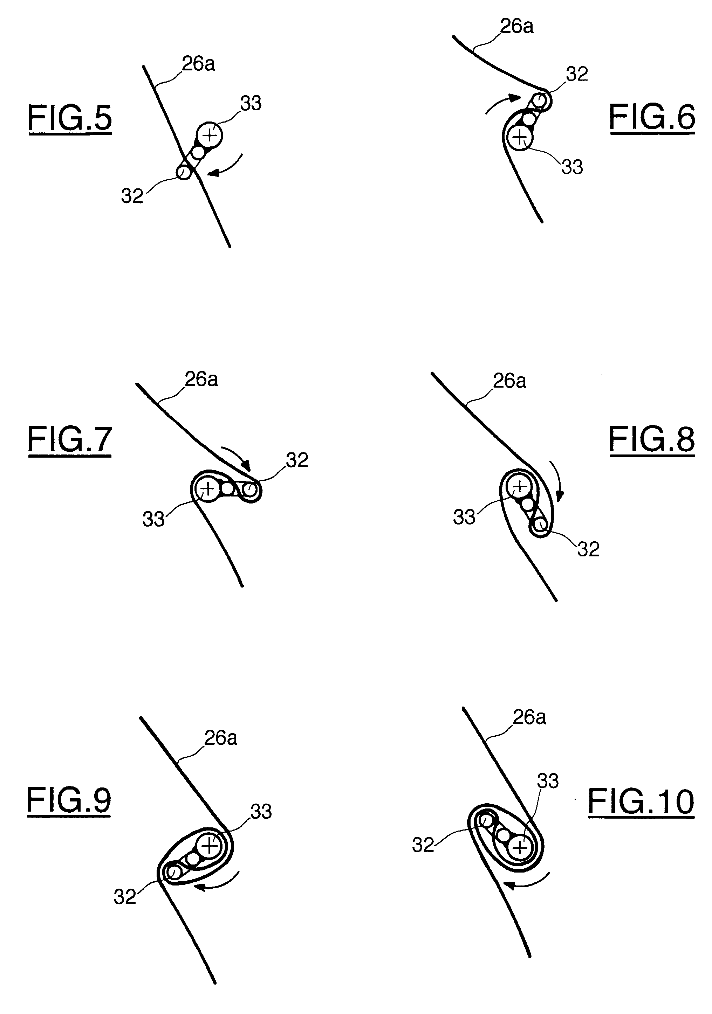

Après un certain nombre de mouvements de va-et-vient, on obtient par exemple les positions successives illustrées sur les figures 5 à 10 qui montrent que la boucle 32, en combinaison avec la tige rotative 33, entraîne la portion pectorale 26a en rotation sur elle-même autour de l'ensemble formé par la boucle 32 et la tige 33. Dans cette rotation, les branches 32a de la boucle 32 provoquent la formation d'une boucle sur la porion pectorale 26, boucle qui s'enroule sur elle-même comme on le voit sur les figures schématiques 5 à 10. Cet enroulement entraîne une réduction de longueur de la portion pectorale 26a et rattrape ainsi le jeu qui avait été créé lors de la traction brusque sur la ceinture de sécurité 26 destinée à neutraliser le système à inertie du dispositif à enrouleur 28. Cet enroulement ainsi que l'existence du levier 39 associé au cliquet 36 permettent d'obtenir une démultiplication de l'effort de traction exercé sur la ceinture de sécurité 26 qui assure une tension forte de cette dernière.

De cette manière, il devient possible d'exercer une forte tension sur la portion pectorale 26a grâce à la rotation du levier 39 jusqu'à ce que le siège pour enfant soit effectivement plaqué contre le siège du véhicule 4 par la ceinture de sécurité 26 qui peut alors être lâchée et qui reste ainsi sous tension, le système à inertie étant neutralisé.

Pour dégager ensuite le siège pour enfant, il suffit de glisser la partie enroulée de la portion pectorale 26a entre les extrémités des branches 32a de la boucle ouverte 32 après avoir déverrouillé la boucle d'accrochage 31.

La présente invention permet ainsi d'obtenir une fixation du siège pour enfant extrêmement efficace et par des moyens simples de réalisation et faciles à manoeuvrer. Grâce à la rotation de la tige 33 qui peut être faite sur plusieurs tours sans aucune difficulté il devient possible de rattraper, même un jeu important de la ceinture de sécurité 26 et de neutraliser ainsi efficacement le système à inertie du dispositif à enrouleur tout en exerçant une forte tension sur la ceinture de sécurité.

## Revendications

1. Siège pour enfant comportant une partie d'assise (5) et une partie de dossier (6), destiné à être posé et fixé sur un siège(4) de véhicule automobile équipé d'une ceinture de sécurité (26) à enrouleur et à trois points comportant une portion ventrale (26b) et une portion pectorale (26a), la partie de dossier comportant, sur sa face amère, un moyen de guidage (25a) de la portion pectorale (26a) de la ceinture de sécurité, caractérisé par le fait que ledit siège comprend un élément rotatif (33) muni d'une boucle ouverte (32) permettant le passage de la portion pectorale (26a) de la ceinture de sécurité et un moyen d'entraînement en rotation dans un seul sens de l'élément rotatif (33) de façon à tendre la ceinture de sécurité à l'encontre de l'enrouleur (28).

2. Siège pour enfant selon la revendication 1 caractérisé par le fait que le moyen d'entraînement en rotation dans un seul sens est un dispositif à cliquet (36) et roue à rochet (35).

3. Siège pour enfant selon l'une des revendications précédentes caractérisé par le fait que l'élément rotatif comprend une barre transversale (33) montée en vue de sa rotation derrière la partie de dossier.

4. Siège pour enfant selon les revendications 2 ou 3 caractérisé par le fait que le moyen d'entraînement en rotation comprend un levier de manoeuvre (39) à va-et-vient muni d'un cliquet (40) coopérant avec la roue à rochet (35).

5. Siège pour enfant selon l'une quelconque des revendications précédentes caractérisé par le fait que des moyens (11, 12) sont prévus pour le passage de la portion ventrale (26b) de la ceinture de sécurité de façon à participer au maintien du siège pour enfant sur le siège du véhicule.

6. Siège pour enfant selon l'une quelconque des revendications précédentes, caractérisé par le fait qu'il comprend un baquet définissant la partie d'assise (5) et la partie de dossier (6) et une armature (3) soutenant le baquet et destiné à être posée et fixée sur le siège (4) du véhicule.

7. Siège pour enfant selon les revendications 3 et 6, caractérisé par le fait que la barre transversale (33) est montée sur des paliers (34) solidaires d'un cadre arrière (11) de l'armature.

8. Siège pour enfant selon les revendications 6 ou 7, caractérisé par le fait qu'une barre d'écartement transversale (12) en U venant prendre appui sur le dossier du siège (4) du véhicule est fixée sur la partie arrière (11) de l'armature de façon à permettre le passage de la portion ventrale (26b) de la ceinture (26) entre ladite partie arrière (11) de l'armature et la barre d'écartement en U (12).
